# EUROPÄISCHE PATENTSCHRIFT

(11) **EP 1 470 994 B1**
(45) Veröffentlichungstag und Bekanntmachung des Hinweises auf die Patenterteilung: **22.03.2006**
(21) Anmeldenummer: 04001527.3
(22) Anmeldetag: 24.01.2004
(51) Int. Cl.: B62D 55/14, B62D 55/104

(54) **Verschleissschutz Schwingarm eines Kettenfahrzeuges**
Radius arm with wear protection for a tracked vehicle
Bras oscillant avec protection contre l'usure pour véhicule à chenilles

(30) Priorität: 24.04.2003 DE 20306394 U
(43) Veröffentlichungstag der Anmeldung: 27.10.2004
(73) Patentinhaber: Rheinmetall Landsysteme GmbH, 24107 Kiel (DE)
(72) Erfinder: Kühl, Manfred, 24229 Schwendeneck (DE)
(74) Vertreter: Dietrich, Barbara

(56) Entgegenhaltungen:
- FR-A- 1 339 784
- US-A- 5 927 737
- PATENT ABSTRACTS OF JAPAN Bd. 2002, Nr. 02, 2. April 2002 (2002-04-02) -& JP 2001 301670 A (MITSUBISHI AGRICULT MACH CO LTD), 31. Oktober 2001 (2001-10-31)

## Beschreibung

Die Erfindung bezieht sich auf eine spezielle Schutzvorrichtung an einem frontgetriebenen Kettenfahrzeug mit Drehstabfederung der Laufrollen, zum Beispiel der Panzerhaubitze 2000.

Bei einem großen Fahrzeug mit, zum Beispiel 7 Laufrollen, besitzt die Kette aufgrund ihrer Länge eine merkbare Elastizität und "Torsionsweichheit. Insbesondere bei Frontantrieb bildet sich dann im Fahrbetrieb bei Aufbringung von großem Moment an den vorderen Kettenantriebsrädern zwischen dem Kettenrad und der ersten Laufrolle eine gewisse Lose in der Kette oder ein sogenannter Kettenbauch, häufig auch bei Kurvenfahrten und Wedelfahrt. Da die Kette auch flattern und sich seitlich bewegen kann, bei entsprechenden Bodenbeschaffenheiten, Federungsvorgängen der Laufrollen und entsprechend der eingestellten Kettenspannung, kommt es vor, dass die Kette den Lagerflansch der ersten Laufrolle, insbesondere der rechten und am weitesten vorne angebrachten Laufrolle, beschädigen und Flanschmaterial abtragen kann.

Ein gattungsgemäßes Fahrzeug ist z.B. aus der US, A, 5 927 737 bekannt.

Nach dem Stand der Technik gibt es keine bekannten *montierbaren* Vorrichtungen zum Schutz des vordersten Lagerflansches eines frontgetriebenen Kettenfahrzeugs gegen die Laufkette. Bekannt ist hingegen ein Verfahren und eine Vorrichtung zum Richten eines deformierten Lagerflansches in einem Kettenfahrzeug. Eine derartige Vorrichtung ist der DE 197 17 516 A1 entnehmbar.

Aufgabe der Erfindung ist es, eine vorbeugende Maßnahme zur Verhinderung der Zerstörung bzw. Deformierung eines Lagerflansches, welcher die Federstäbe als Federung und gleichzeitig einen Schwingarm einer von zwei gegenüberliegenden Laufrollen links und rechts im Gehäuse eines Kettenfahrzeugs lagert, aufzuzeigen, wodurch dieser gegen die vorbeilaufende Fahrkette geschützt wird. Dies soll insbesondere für den vorderen rechten Lagerflansch zutreffen.

Die Lösung dieser Aufgabe erfolgt erfindungsgemäß dadurch, dass ein geeignet geformter Schutzbügel oberhalb und außen in Richtung zur Kette auf dem gefährdeten Teil (6) des Lagerflansches (4) geeignet und lösbar befestigt wird.

Die Vorteile der Erfindung liegen darin, dass der Lagerflansch gegen mechanische Beschädigung durch die vorbeilaufende Kette weitestgehend geschützt ist und die aufwendige und einsatzhemmende Reparatur bei Austausch eines defekten Lagerflansches vermieden wird. Anstelle wird bei Beschädigung des Schutzbügels (3) dieser gegen einen anderen Schutzbügel in kurzer Zeit ausgetauscht. Weiterhin können bereits vorhandene Fahrzeuge mit dem Schutzbügel nachgerüstet werden.

Ein Ausführungsbeispiel der Erfindung ist in der Zeichnung schematisch dargestellt und wird im folgenden näher beschrieben. Es zeigen:
- Figur 1:: Lagerteil mit Schutzbügel
- Figur 2:: Lagerteil mit Schutzbügel, gedrehte Ansicht
- Figur 3:: Schutzbügel am Fahrzeug angebaut
- Figur 4:: Beschädigung eines Lagerflansches nach dem Stand der Technik

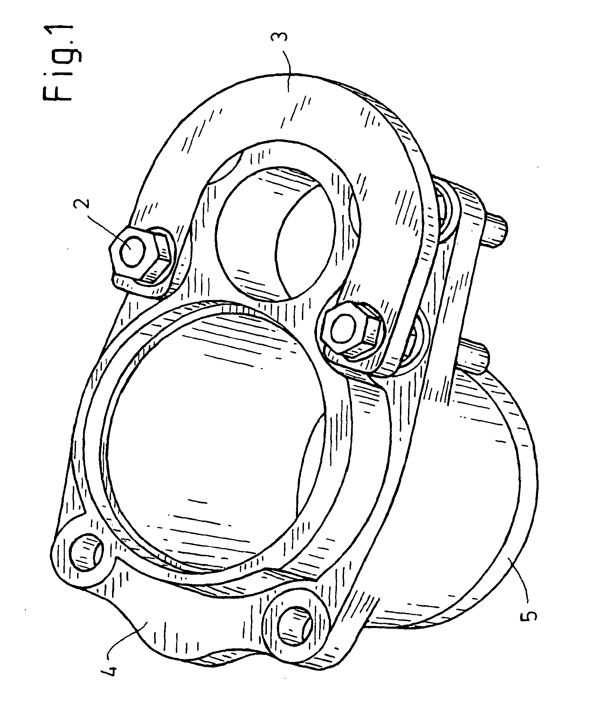

Figur 1 zeigt die Lagerung 5 mit Lagerflansch 4 und angebautem Schutzbügel 3 und Befestigungsschraube 2.

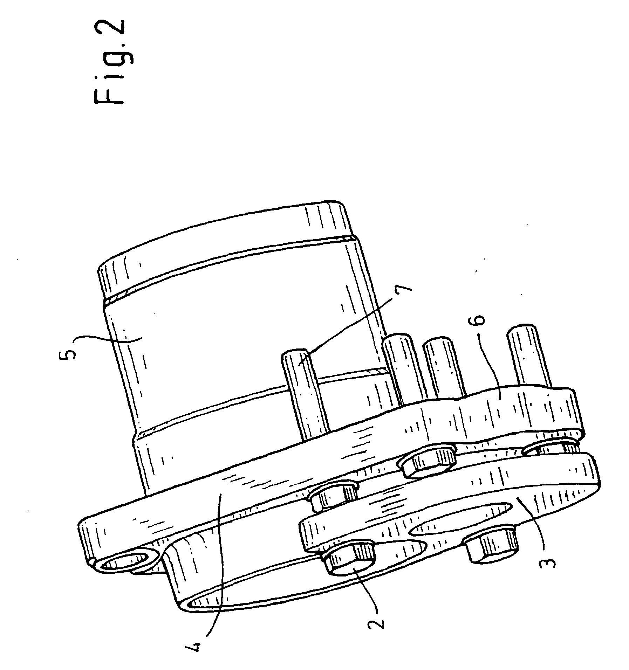

Figur 2 zeigt die Lagerung 5 von der Seite mit Befestigungsschrauben 2, 7 und einer Kontur 6, welche vorzugsweise *formgenau* unterhalb des Schutzbügels 3 liegt.

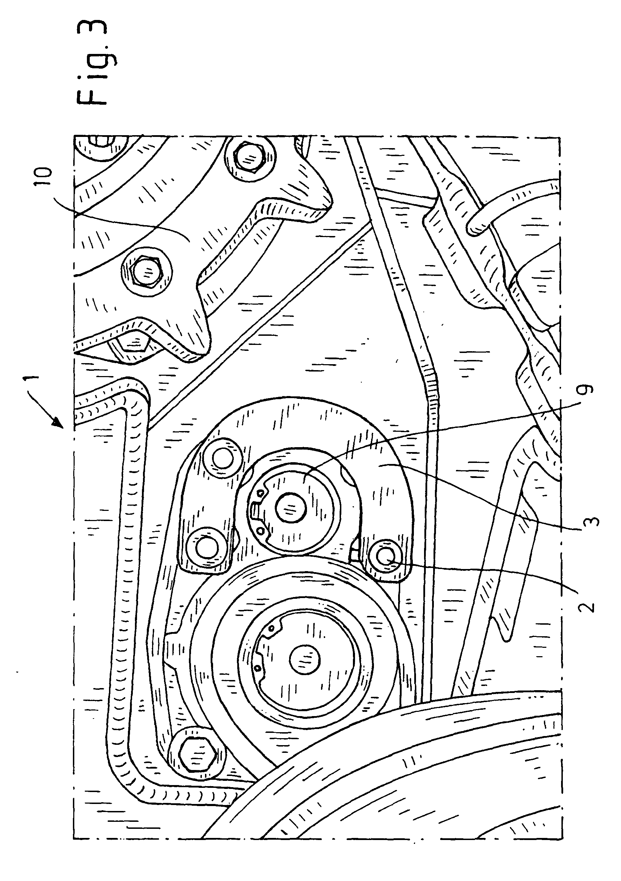

Figur 3 zeigt ein Kettenfahrzeug 1 mit einer Drehstablagerung 9 und einem Antriebsrad 10 (teilweise dargestellt). Der Schutzbügel 3 ist mittels Schrauben 2 oberhalb des Lagerflansches befestigt.

Der Schutzbügel 3 wird mittels zum Beispiel Befestigungsschrauben 2 am Lagerflansch 4 der Drehstäbe 9 und eines Laufrollenschwingarms 11 so angebracht, dass die vordere Kontur 6 des Lagerflansches 4 gegen eine mechanische Beschädigung durch die vorbeilaufende Fahrkette des Kettenfahrzeugs 1 geschützt ist. Dazu weist der Schutzbügel 3 eine halbkreisförmige Form auf und ist mittels der geeigneten Befestigung, bevorzugt *formschlüssig*, oberhalb auf dem Lagerflansch 4 befestigt. Die unter dem Schutzbügel 3 befindliche Kontur 6 des Schwingarmflansches 4 ist so gegen mechanische Einwirkungen von außen und der Seite geschützt. Der Schutzbügel 3 ist als ein in etwa zum Halbkreis gekrümmter Steg ausgeführt, so dass der im Zentrum der Krümmung im Lager gelagerte Drehstab- bzw. Drehstablagerung 9 von außen sichtbar bleibt. Zum Schutz des Lagerflansches 4 ist der Schutzbügel 3 etwas größer als die darunter liegende Kontur 6 des Lagerflansches 4 ausgeführt, wobei der Schutzbügel 3 vorzugsweise die Außenkante der Kontur 6 vollständig abdeckt. Der Schutzbügel 3 ist z.B. aus Plattenmaterial gewisser Dicke ausgeschnitten.
Praktisch kann der Schutzbügel 3 mittels beispielsweise drei verlängerter Spezialschrauben, welche als Befestigungsschrauben 7 einerseits die Lagerung 5 im Fahrzeuggehäuse 1 befestigen, am Lagerflansch 4 befestigt werden, wobei die Schrauben 7 als Durchgangsschraube bzw. Bolzengewindeteil bezüglich Durchgangslöchern im Schutzbügel 3 ausgeführt sind und der Schutzbügel 3 mittels Schraubenmutter 2 an Schraube 7 befestigt wird.

Der Schutzbügel 3 kann bei Austausch einer entsprechenden Anzahl Befestigungsschrauben 7 gegen verlängerte Spezialschrauben und entsprechendem Anbau als Nachrüstung an verschiedenen Kettenfahrzeugen zum Schutz des Schwingarmflansches 4 angewendet werden.

Der einfach und schnelle Austausch eines defekten Schutzbügels 3 gegen einen neuen Schutzbügel 3 erfolgt mittels Lösen und Wiederanziehen von beispielsweise 3 Schrauben 7.

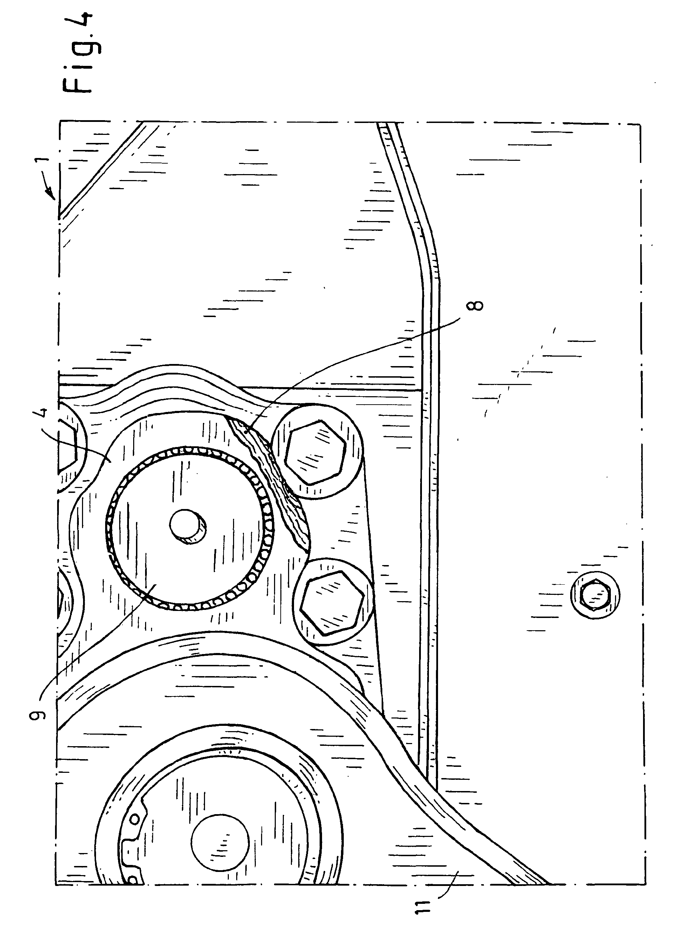

Figur 4 zeigt einen Drehstab 9 und einen Laufrollenschwingarm 11 mit dem Lagerflansch 4 ohne einen Schutzbügel 3 mit einer Beschädigung 8 an einem Fahrzeug 1 nach einer Einsatzfahrt. Dies verhindert die vorliegende Lösung.

## Patentansprüche

1. Vorrichtung für den Schutz des Lagerflansches (4) an der Schwingarmlagerung (5) eines Kettenfahrzeugs (1) links und rechts am Fahrzeug (1), insbesondere bei einem frontgetriebenen Fahrzeug, zur Lagerung einer ersten Laufrolle nach dem frontseitigen Antriebsrad (10), **dadurch gekennzeichnet, dass** ein etwa halbkreisförmiger Schutzbügel (3) mittels geeigneter Befestigung bevorzugt *formschlüssig o*berhalb auf dem Lagerflansch (4) befestigt wird, so dass die unter dem Schutzbügel (3) befindliche Kontur (6) des lagerflansches (4) gegen mechanische Einwirkungen von außen und der Seite geschützt ist.

2. Vorrichtung nach Anspruch 1, **dadurch gekennzeichnet, dass** der Schutzbügel (3) entsprechend der Form der darunterliegenden Kontur (6) des Lagerflansches (4) als etwa zum Halbkreis gekrümmter Steg ausgeführt ist, so dass einer im Zentrum der Krümmung im Lager gelagerte Drehstab (9) von außen sichtbar bleibt.

3. Vorrichtung nach einem der oben genannten Ansprüche, **dadurch gekennzeichnet, dass** der Schutzbügel (3) zum Schutz des Lagerflansches (4) etwas größer als die darunterliegende Kontur (6) des Lagerflansches (4) ausgeführt wird und der Bügel (3) die Außenkante der Kontur (6) vollständig abdeckt.

4. Vorrichtung nach einem der oben genannten Ansprüche, **dadurch gekennzeichnet, dass** der Schutzbügel (3) aus Plattenmaterial gewisser Dicke ausgeschnitten ist.

5. Vorrichtung nach einem der oben genannten Ansprüche, **dadurch gekennzeichnet, dass** der Schutzbügel (3) mittels beispielsweise drei verlängerter Spezialschrauben, welche als Befestigungsschrauben (7) einerseits die Lagerung (5) im Fahrzeuggehäuse (1) befestigen, am Lagerflansch (4) befestigt wird, wobei die Schrauben als Durchgangsschraube bzw. Bolzengewindeteil bezüglich Durchgangslöchern im Schutzbügel (3) ausgeführt sind und der Schutzbügel (3) mittels Schraubenmutter (2) an Schraube (7) befestigt wird.

6. Vorrichtung nach einem der oben genannten Ansprüche, **dadurch gekennzeichnet, dass** der Schutzbügel (3) bei Austausch einer entsprechenden Anzahl Befestigungsschrauben (7) gegen verlängerte Spezialschrauben und entsprechendem Anbau als Nachrüstung an verschiedenen Kettenfahrzeugen zum Schutz des Schwingarmflansches angewendet werden kann.

7. Vorrichtung nach einem der oben genannten Ansprüche, **dadurch gekennzeichnet, dass** der einfache und schnelle Austausch eines defekten Schutzbügels (3) gegen einen neuen Schutzbügel (3) mittels Lösen und Wiederanziehen von beispielsweise 3 Schrauben (7) ausgeführt werden kann.

## Claims

1. Device for protecting the bearing flange (4) on the radius arm bearing (5) of a tracked vehicle (1) on the left and right of the vehicle (1), in particular in a front-wheel driven vehicle, for supporting a first running roller after the front-end drive wheel (10), **characterized in that** an approximately semicircular protective bracket (3) is preferably attached in a positively locking fashion to the top of the bearing flange (4) by means of a suitable attachment, so that the contour (6) of the bearing flange (4) which is located below the protective bracket (3) is protected against mechanical effects from the outside and from the side.

2. Device according to Claim 1, **characterized in that** the protective bracket (3) is embodied as a web which is curved approximately to a semicircle, in accordance with the shape of the contour (6) of the bearing flange (4) located underneath it, so that a torsion bar (9) which is mounted in the centre of the curvature in the bearing remains visible from the outside.

3. Device according to one of the abovementioned claims, **characterized in that**, in order to protect the bearing flange (4), the protective bracket (3) is made somewhat larger than the contour (6) of the bearing flange (4) which is located underneath it, and the bracket (3) completely covers the outer edge of the contour (6).

4. Device according to one of the abovementioned claims, **characterized in that** the protective bracket (3) is cut out of plate material of a certain thickness.

5. Device according to one of the abovementioned claims, **characterized in that** the protective bracket (3) is attached to the bearing flange (4) by means of, for example, three extended special screws which, as attachment screws (7), attach the bearing (5) in the vehicle housing (1) at one end, and wherein the screws are embodied as a through-screw or bolt threaded component for through-holes in the protective bracket (3), and the protective bracket (3) is attached to screw (7) by means of a nut (2).

6. Device according to one of the abovementioned claims, **characterized in that**, when a corresponding number of attachment screws (7) is replaced with extended special screws and when the protective bracket (3) is correspondingly attached as a retrofitted item to various tracked vehicles, said protective bracket (3) can be used to protect the radial arm flange.

7. Device according to one of the abovementioned claims, **characterized in that** the simple and rapid replacement of a defective protective bracket (3) with a new protective bracket (3) can be carried out by undoing and retightening, for example, three screws (7).

## Revendications

1. Dispositif de protection du flasque de palier (4) sur le support de bras oscillant (5) d'un véhicule à chenilles (1) à gauche et à droite sur le véhicule (1), notamment dans le cas d'un véhicule à traction avant, pour le support d'un premier rouleau de roulement après la roue d'entraînement (10) du côté avant, **caractérisé en ce qu'**un arceau de protection (3) de forme approximativement semi-circulaire est fixé au moyen d'une fixation appropriée, de préférence par engagement positif par-dessus le flasque de palier (4), de sorte que le contour (6) du flasque de palier (4) se trouvant en dessous de l'arceau de protection (3) soit protégé contre les effets mécaniques de l'extérieur et depuis le côté.

2. Dispositif selon la revendication 1, **caractérisé en ce que** l'arceau de protection (3) est réalisé en fonction de la forme du contour sous-jacent (6) du flasque de palier (4) sous forme d'aile recourbée approximativement en demi-cercle, de sorte qu'une barre rotative (9) montée dans le palier au centre de la courbure reste visible de l'extérieur.

3. Dispositif selon l'une quelconque des revendications précédentes, **caractérisé en ce que** l'arceau de protection (3) pour la protection du flasque de palier (4) est réalisé un peu plus grand que le contour sous-jacent (6) du flasque de palier (4) et l'arceau (3) recouvre complètement le bord extérieur du contour (6).

4. Dispositif selon l'une quelconque des revendications précédentes, **caractérisé en ce que** l'arceau de protection (3) est découpé dans un matériau en plaque d'une certaine épaisseur.

5. Dispositif selon l'une quelconque des revendications précédentes, **caractérisé en ce que** l'arceau de protection (3) est fixé sur le flasque de palier (4) au moyen par exemple de trois vis spéciales prolongées qui fixent le support (5) dans le boîtier du véhicule (1) d'une part sous forme de vis de fixation (7), les vis étant réalisées sous forme de vis traversantes ou de pièces filetées de boulon par rapport à des trous de passage dans l'arceau de protection (3) et l'arceau de protection (3) étant fixé à la vis (7) au moyen d'un écrou fileté (2).

6. Dispositif selon l'une quelconque des revendications précédentes, **caractérisé en ce que** l'arceau de protection (3) peut être utilisé lors du remplacement d'un nombre correspondant de vis de fixation (7) par des vis spéciales prolongées et d'un montage correspondant en rattrapage sur différents véhicules à chenilles pour la protection du flasque du bras oscillant.

7. Dispositif selon l'une quelconque des revendications précédentes, **caractérisé en ce que** le remplacement simple et rapide d'un arceau de protection défectueux (3) par un nouvel arceau de protection (3) peut s'effectuer en desserrant puis en resserrant par exemple 3 vis (7).
